# EUROPÄISCHE PATENTSCHRIFT

(11) **EP 2 807 738 B1**
(45) Veröffentlichungstag und Bekanntmachung des Hinweises auf die Patenterteilung: **28.09.2016**
(21) Anmeldenummer: 13707371.4
(22) Anmeldetag: 01.03.2013
(51) Int. Cl.: H02M 7/483

(54) **MULTIZELLENKONVERTER**
MULTICELL CONVERTER
CONVERTISSEUR À CELLULES MULTIPLES

(30) Priorität: 15.03.2012 DE 102012204046
(43) Veröffentlichungstag der Anmeldung: 03.12.2014
(73) Patentinhaber: Siemens Aktiengesellschaft, 80333 München (DE)
(72) Erfinder: MOSER, Jürgen, 91369 Wiesenthau (DE)
(86) Internationale Anmeldenummer: PCT/EP2013/054175
(87) Internationale Veröffentlichungsnummer: WO 2013/135502

(56) Entgegenhaltungen:
- WO-A1-2011/160678
- WO-A1-2012/010065
- DE-A1-102010 008 978

## Beschreibung

Die Erfindung bezieht sich auf einen Multizellenkonverter mit den Merkmalen gemäß dem Oberbegriff des Patentanspruchs 1.

Ein Multizellenkonverter ist aus der Druckschrift "An Innovative Modular Multilevel Converter Topology Suitable for Wide Power Range" (A. Lesnicar und R. Marquardt, 2003 IEEE Bologna Power Tech Conference, 23.-26. Juni 2003, Bologna, Italien) bekannt. Bei diesem vorbekannten Multizellenkonverter handelt es sich um einen sogenannten Marquardt-Umrichter, der zumindest zwei parallel geschaltete Reihenschaltungen umfasst, deren äußere Anschlüsse Gleichspannungsanschlüsse des Umrichters bilden. Jede der parallel geschalteten Reihenschaltungen umfasst jeweils mindestens zwei in Reihe geschaltete Schaltmodule, die jeweils mindestens zwei Schalter und einen Kondensator umfassen. Durch eine geeignete Ansteuerung der Schalter lässt sich das Spannungsniveau an den Ausgangsanschlüssen einstellen. Der vorbekannte Marquardt-Umrichter ist mit Halbbrückenmodulen (auch Marquardtmodule genannt) ausgestattet.

Eine Weiterentwicklung des beschriebenen Multizellenkonverters ist aus der Druckschrift WO 2011/067120 bekannt. Dieser Multizellenkonverter ist mit Halbbrückenmodulen ausgestattet, die durch einen Schalter miteinander verbunden sind. Der Multizellenkonverter gemäß der Druckschrift WO 2011/067120 weist die Merkmale des Oberbegriffs des Anspruchs 1 auf.

Multizellenkonverter auf der Basis von Halbbrückenmodulen benötigen zwar relativ wenig Bauteile und sind dadurch relativ preiswert herzustellen, jedoch beherrschen sie einen Gleichspannungskurzschluss ohne aufwändige Zusatzbeschaltung nicht. Auch können Multizellenkonverter auf der Basis von Halbbrückenmodulen nicht im Dreieck verschaltet werden, da sie keine negative Spannung an einem Zweig aufbauen können.

Darüber hinaus ist bekannt, dass Multizellenkonverter mit Vollbrückenmodulen anstelle von Halbbrückenmodulen ausgestattet werden können. Der Vorteil eines Multizellenkonverters mit Vollbrückenmodulen besteht darin, dass der Multizellenkonverter - im Gegensatz zu Multizellenkonvertern auf der Basis von Halbbrückenmodulen - einen Gleichspannungskurzschluss (DC-Kurzschluss) beherrschen kann, da die Vollbrückenmodule so gesteuert werden können, dass eine entsprechende Gegenspannung aufgebaut wird. Multizellenkonverter in Vollbrückenmodultechnik können - im Gegensatz zu Multizellenkonvertern auf der Basis von Halbbrückenmodulen - außerdem im Dreieck verschaltet werden.

Der Erfindung liegt die Aufgabe zugrunde, einen Multizellenkonverter anzugeben, der mit wenigen Bauteilen auskommt und universell einsetzbar ist.

Diese Aufgabe wird erfindungsgemäß durch einen Multizellenkonverter mit den Merkmalen gemäß Patentanspruch 1 gelöst. Vorteilhafte Ausgestaltungen des erfindungsgemäßen Multizellenkonverters sind in Unteransprüchen angegeben.

Danach ist erfindungsgemäß vorgesehen, dass mindestens eine Diode, eine aus zwei oder mehr Dioden bestehende Reihenschaltung und/oder zumindest ein Schaltelement elektrisch parallel zu den beiden in Reihe geschalteten Halbbrückenmodulen liegt.

Ein wesentlicher Vorteil des erfindungsgemäßen Multizellenkonverters besteht darin, dass sich bei den Schaltmodulen durch die Kombination von zwei Halbbrückenmodulen unter Verwendung eines zusätzlichen Schaltelements zu einem Doppelmodul eine Vollbrückenfunktion (zumindest in einer Stromflussrichtung) mit minimaler Anzahl an Schaltelementen erreichen lässt, und zwar die Vollbrückenfunktion zweier in Reihe geschalteter Vollbrückenmodule. Während für eine Reihenschaltung zweier Vollbrückenmodule acht Schaltelemente benötigt werden, kann das erfindungsgemäße Doppelmodul - je nach Konfiguration - beispielsweise mit lediglich fünf oder sechs Schaltelementen auskommen.

Ein weiterer wesentlicher Vorteil des erfindungsgemäßen Multizellenkonverters besteht darin, dass gegenüber einem herkömmlichen Multizellenkonverter mit Vollbrückenmodulen der Ansteuerungsaufwand reduziert ist, weil insgesamt weniger Schaltelemente angesteuert werden müssen.

Bei einer ersten besonders bevorzugten Ausgestaltung des Multizellenkonverters ist vorgesehen, dass genau eine Diode elektrisch parallel zu den beiden in Reihe geschalteten Halbbrückenmodulen liegt.

Bei einer zweiten besonders bevorzugten Ausgestaltung des Multizellenkonverters ist vorgesehen, dass die zwei Halbbrückenmodule des zumindest einen Schaltmoduls mittels zumindest eines ersten und eines zweiten Schaltelements elektrisch verbunden sind, eine erste Diode elektrisch parallel zu einem der beiden Halbbrückenmodule und dem ersten Schaltelement liegt und eine zweite Diode elektrisch parallel zu dem anderen der beiden Halbbrückenmodule und dem zweiten Schaltelement liegt.

Bei einer dritten besonders bevorzugten Ausgestaltung des Multizellenkonverters ist vorgesehen, dass dieser als Schaltelemente sechs Transistoren aufweist und genau einer der Transistoren elektrisch parallel zu den beiden in Reihe geschalteten Halbbrückenmodulen liegt.

Besonders bevorzugt weisen alle Schaltmodule des Multizellenkonverters jeweils zwei Halbbrückenmodule auf, die in Reihe geschaltet sind und mittels zumindest eines Schaltelements elektrisch verbunden sind.

Der Energiespeicher der Schaltmodule umfasst vorzugsweise jeweils zusätzlich einen Batteriespeicher. Ein solcher Batteriespeicher ist bevorzugt über einen Gleichspannungssteller oder ähnliche Anschaltungen an andere Komponenten, vorzugsweise parallel zu einem Kondensator, des jeweiligen Schaltmoduls angeschlossen.

Auch kann das Schaltmodul einen Zwei-Level-Umrichter zur E-nergieein- oder ausleitung umfassen. Ein solcher Zwei-Level-Umrichter liegt vorzugsweise elektrisch parallel zu einem Kondensator des Schaltmoduls.

Die Schaltelemente sind vorzugsweise leistungselektronische Schaltelemente, beispielsweise auf der Basis von Thyristoren oder Transistoren. Beispielsweise handelt es sich bei den leistungselektronischen Schaltelementen um IBGTs (Bipolare Transistoren mit integrierter Gateelektrode).

Der Multizellenkonverter bildet vorzugsweise einen Umrichter mit einer ersten Anschlussseite, an der zumindest ein Wechselstrom eingespeist und/oder zumindest eine Wechselspannung angelegt werden kann, und einer zweiten Anschlussseite, an der ein durch Umrichtung gebildeter umgerichteter Wechseloder Gleichstrom entnommen werden kann, wobei der Umrichter zumindest zwei parallel geschaltete Reihenschaltungen umfasst, deren äußere Anschlüsse mit der zweiten Anschlussseite des Umrichters in Verbindung stehen oder diese bilden, wobei jede der parallel geschalteten Reihenschaltungen jeweils mindestens zwei in Reihe geschaltete Schaltmodule umfasst und wobei mit den Schaltmodulen eine Steuereinrichtung in Verbindung steht, die die Schaltmodule derart ansteuern kann, dass in den Reihenschaltungen Zweigströme fließen und der umgerichtete Wechsel- oder Gleichstrom an der zweiten Anschlussseite eine vorgegebene Größe und/oder einen vorgegebenen zeitlichen Verlauf aufweist.

Der Umrichter ist bevorzugt derart ausgestaltet, dass er auch ein Einspeisen eines Wechsel- oder Gleichstroms an der zweiten Anschlussseite und ein Entnehmen eines durch Umrichtung gebildeten Wechselstroms an der ersten Anschlussseite ermöglicht.

Alternativ kann der Multizellenkonverter beispielsweise einen Konverter bilden mit drei elektrisch im Dreieck geschalteten Reihenschaltungen, von denen jede jeweils mindestens zwei in Reihe geschaltete Schaltmodule umfasst.

Konverter mit Dreieckskonfiguration sind im Allgemeinen im Gegensatz zu anderen Konvertern in Brückenkonfiguration nicht in der Lage, im stationären Betrieb Wirkleistung zu übertragen oder umzuwandeln (abgesehen von ihrer eigenen Verlustleistung). Daher wird es als vorteilhaft angesehen, wenn der Konverter zur Blindleistungs-, Oberschwingungs- und Flickerkompensation eingesetzt wird. Mit anderen Worten handelt es sich bei dem Konverter vorzugsweise um einen Kompensator, insbesondere einen Blindleistungs-, Oberschwingungs- oder Flickerkompensator, oder um einen Bestandteil eines solchen Kompensators.

Die Erfindung bezieht sich außerdem auf ein Schaltmodul für einen Multizellenkonverter mit zwei Halbbrückenmodulen, die jeweils zwei in Reihe geschaltete Schaltelemente mit jeweils parallel geschalteter Diode und einen zu den in Reihe geschalteten Schaltelementen parallel geschalteten elektrischen Energiespeicher umfassen.

Erfindungsgemäß ist bezüglich eines solchen Schaltmoduls vorgesehen, dass mindestens eine Diode, eine aus zwei oder mehr Dioden bestehende Reihenschaltung und/oder zumindest ein Schaltelement elektrisch parallel zu den beiden in Reihe geschalteten Halbbrückenmodulen liegt.

Bezüglich der Vorteile des erfindungsgemäßen Schaltmoduls sei auf die oben erläuterten Vorteile des erfindungsgemäßen Multizellenkonverters verwiesen, da die Vorteile des erfindungsgemäßen Multizellenkonverters denen des erfindungsgemäßen Schaltmoduls im Wesentlichen entsprechen.

Bei einer ersten besonders bevorzugten Ausgestaltung des Schaltmoduls ist vorgesehen, dass mindestens eine Diode elektrisch parallel zu den beiden in Reihe geschalteten Halbbrückenmodulen liegt.

Bei einer zweiten besonders bevorzugten Ausgestaltung des Schaltmoduls ist vorgesehen, dass die zwei Halbbrückenmodule mittels zumindest eines ersten und eines zweiten Schaltelements elektrisch verbunden sind, eine erste Diode elektrisch parallel zu einem der beiden Halbbrückenmodule und dem ersten Schaltelement liegt und eine zweite Diode elektrisch parallel zu dem anderen der beiden Halbbrückenmodule und dem zweiten Schaltelement liegt.

Bei einer dritten besonders bevorzugten Ausgestaltung des Schaltmoduls ist vorgesehen, dass dieses als Schaltelemente sechs Transistoren aufweist und genau einer der Transistoren elektrisch parallel zu den beiden in Reihe geschalteten Halbbrückenmodulen liegt.

Besonders bevorzugt weisen alle Schaltmodule jeweils zwei Halbbrückenmodule auf, die in Reihe geschaltet sind und mittels zumindest eines Schaltelements elektrisch verbunden sind.

Die Erfindung wird nachfolgend anhand von Ausführungsbeispielen näher erläutert; dabei zeigen beispielhaft:
- Figur 1: ein Ausführungsbeispiel für einen erfindungsgemäßen Multizellenkonverter, der einen Umrichter bildet,
- Figur 2: ein erstes Ausführungsbeispiel für ein Schaltmodul für den Multizellenkonverter gemäß Figur 1,
- Figur 3: beispielhaft die Spannungspotentiale bei dem Schaltmodul gemäß Figur 2 bei Stromfluss in eine Richtung,
- Figur 4: beispielhaft zur allgemeinen Erläuterung eine Serienschaltung von zwei Vollbrückenmodulen,
- Figur 5: ein zweites Ausführungsbeispiel für ein Schaltmodul für den Multizellenkonverter gemäß Figur 1,
- Figur 6: ein Ausführungsbeispiel für einen erfindungsgemäßen Multizellenkonverter, der elektrisch im Dreieck geschaltet ist,
- Figur 7: ein weiteres Ausführungsbeispiel für ein Schaltmodul für den Multizellenkonverter gemäß Figur 1 oder Figur 6 und
- Figur 8: beispielhaft die Spannungspotentiale bei dem Schaltmodul gemäß Figur 7 bei Stromfluss in beide Richtungen.

In den Figuren werden der Übersicht halber für identische oder vergleichbare Komponenten stets dieselben Bezugszeichen verwendet.

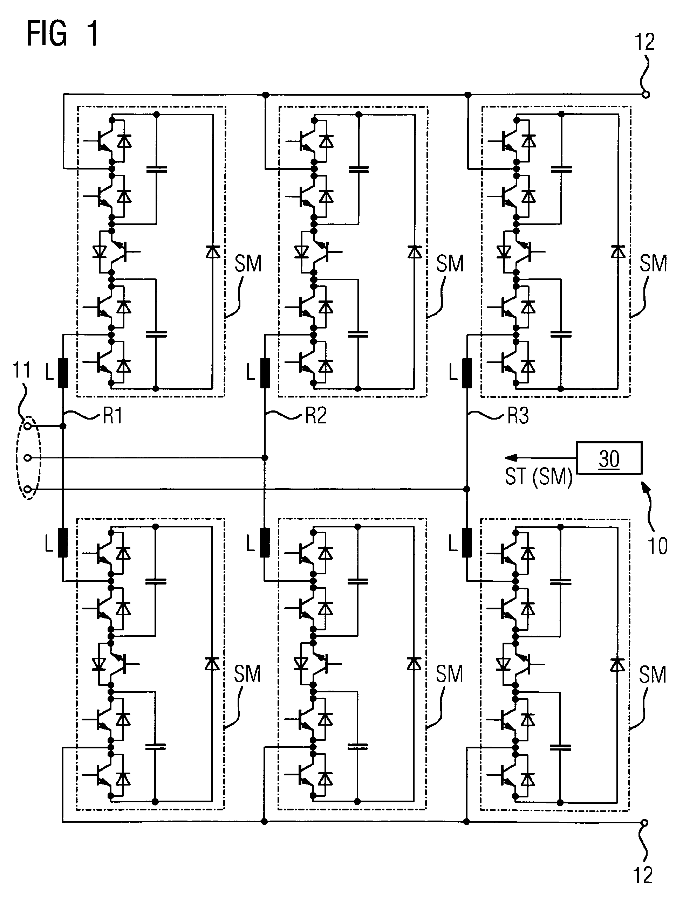

Die Figur 1 zeigt einen Multizellenkonverter 10, der eine erste Anschlussseite 11 sowie eine zweite Anschlussseite 12 aufweist.

Bei dem Ausführungsbeispiel gemäß Figur 1 kann an die erste Anschlussseite 11 des Multizellenkonverters 10 ein dreiphasiges Wechselspannungssystem angeschlossen werden, das drei Phasenspannungen bereitstellt. Durch die drei Wechselspannungen werden drei Wechselströme erzeugt, die an der ersten Anschlussseite 11 in den Multizellenkonverter 10 eingespeist werden.

Mit den an der ersten Anschlussseite 11 anliegenden Wechselspannungen und Wechselströmen werden aufgrund der Umrichtung in dem Multizellenkonverter 10 an der zweiten Anschlussseite 12 beispielsweise eine Gleichspannung sowie ein Gleichstrom erzeugt, die an der zweiten Anschlussseite 12 den Multizellenkonverter 10 verlassen.

Die Beschaltung des Multizellenkonverters 10 ist hier nur beispielhaft zu verstehen; bei dem Multizellenkonverter 10 ist es alternativ möglich, an der zweiten Anschlussseite 12 elektrische Energie in den Multizellenkonverter 10 einzuspeisen und an der ersten Anschlussseite 11 elektrische Energie in Form umgerichteter Spannungen und umgerichteter Ströme zu entnehmen. Auch ist es möglich, bei einer Einspeisung von Wechselspannungen bzw. Wechselströmen an der ersten Anschlussseite 11 eine Umrichtung derart vorzunehmen, dass an der zweiten Anschlussseite 12 keine dauerhaft konstante Gleichspannung entsteht, sondern eine zeitliche variierende Gleichspannung oder eine Wechselspannung.

Wie sich der Figur 1 entnehmen lässt, weist der Multizellenkonverter 10 drei Reihenschaltungen R1, R2 und R3 auf, die jeweils zwei Schaltmodule SM umfassen. Die drei Reihenschaltungen R1, R2 und R3 bilden drei Umrichterzweige des Multizellenkonverters 10.

Jede der drei Reihenschaltungen R1, R2 und R3 ist jeweils mit zwei Induktivitäten L ausgestattet, über die die beiden Schaltmodule SM der jeweiligen Reihenschaltung an die erste Anschlussseite 11 angeschlossen sind.

Die Struktur des Multizellenkonverters 10 entspricht somit der Grundstruktur eines Zellenkonverters, wie er in der Literatur häufig auch als Marquardt-Umrichter bezeichnet wird, mit dem Unterschied, dass die Schaltmodule SM anders ausgestaltet sind. Dies wird weiter unten noch näher erläutert.

Die Figur 1 zeigt außerdem, dass der Multizellenkonverter 10 zur Ansteuerung der Schaltmodule SM der drei Reihenschaltungen R1, R2 und R3 eine Steuereinrichtung 30 aufweist, die über individuelle Steuerleitungen jeweils mit jedem der Schaltmodule SM der drei Reihenschaltungen R1, R2 und R3 verbunden ist. Die Verbindungsleitungen sind in der Figur 1 aus Gründen der Übersicht nicht eingezeichnet. Zur Ansteuerung der Schaltmodule SM erzeugt die Steuereinrichtung 30 Steuersignale ST(SM), die über die nicht gezeigten Steuerleitungen zu den Schaltmodulen übertragen werden.

Zur Ermittlung der optimalen Steuersignale ST(SM) ist die Steuereinrichtung 30 eingangsseitig mit einer Vielzahl an Messsignalen und/oder Messdaten beaufschlagt. Beispielsweise handelt es sich um Messsignale und/oder Messdaten, die die an der ersten Anschlussseite 11 anliegenden Wechselspannungen, die in die erste Anschlussseite 11 fließenden Wechselströme, den an der zweiten Anschlussseite 12 fließenden Gleichstrom sowie die an der zweiten Anschlussseite 12 anliegende Spannung angeben.

Darüber hinaus kann die Steuereinrichtung 30 - beispielsweise über die bereits erwähnten Steuerleitungen oder über weitere Signalleitungen - derart mit den Schaltmodulen SM der drei Reihenschaltungen R1, R2 und R3 verbunden sein, dass den jeweiligen Zustand der Schaltmodule beschreibende Zustandsdaten an die Steuereinrichtung 30 übermittelt werden können.

Die Steuereinrichtung 30 weiß also aufgrund der eingangsseitig anliegenden Daten, welche Spannungen und Ströme an der ersten Anschlussseite 11 und an der zweiten Anschlussseite 12 vorhanden sind, sowie außerdem, in welchem Betriebszustand sich die einzelnen Schaltmodule SM der drei Reihenschaltungen R1, R2 und R3 befinden.

Aufgrund der eingangsseitig anliegenden Messsignale und/oder Messdaten und der eingangsseitig anliegenden Zustandsdaten ist die Steuereinrichtung 30 in der Lage, die Schaltmodule SM derart anzusteuern, dass in Abhängigkeit von den an der ersten Anschlussseite 11 anliegenden Wechselspannungen und Wechselströmen ausgangsseitig eine gewünschte Gleichspannung und ein gewünschter Gleichstrom erzeugt bzw. abgegeben werden.

Wie bereits erwähnt, kann der Multizellenkonverter 10 auch invers bzw. umgekehrt betrieben werden, wobei an der zweiten Anschlussseite 12 Strom eingespeist und umgerichteter Strom an der ersten Anschlussseite 11 entnommen wird. Ein entsprechender umgekehrter bzw. inverser Betrieb wird durch die Steuereinrichtung 30 ermöglicht, indem sie die Schaltmodule SM entsprechend anders ansteuert.

Um die beschriebenen Steueraufgaben wahrnehmen zu können, kann die Steuereinrichtung 30 beispielsweise eine Recheneinrichtung (z. B. in Form einer Datenverarbeitungsanlage oder eines Computers) umfassen, die derart programmiert ist, dass sie in Abhängigkeit von den eingangsseitig anliegenden Messsignalen, Messdaten bzw. Zustandsdaten die jeweils optimale Ansteuerung der Schaltmodule SM ermittelt und in dieser Weise die zur Ansteuerung nötigen Steuersignale ST(SM) erzeugt. Ein entsprechendes Steuerprogramm (bzw. Steuerprogrammmodul) zur Ansteuerung der Recheneinrichtung kann in einem in der Steuereinrichtung befindlichen Speicher abgespeichert sein.

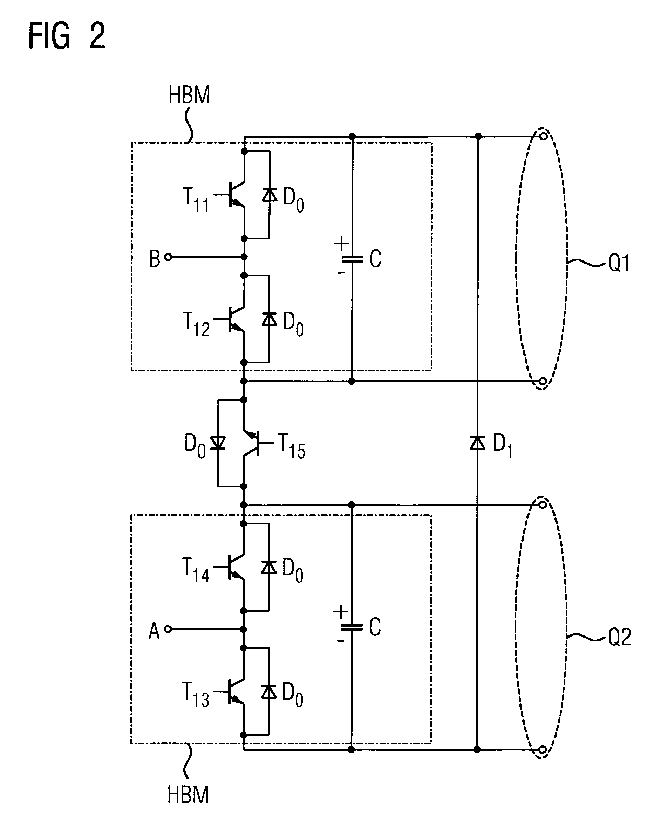

Die Figur 2 zeigt ein erstes Ausführungsbeispiel für ein Schaltmodul SM, das in dem Multizellenkonverter gemäß Figur 1 eingesetzt werden kann. Das Schaltmodul SM wird durch ein Doppelmodul gebildet, das zwei Halbbrückenmodule HBM aufweist.

Die zwei Halbbrückenmodule HBM weisen jeweils zwei Schaltelemente T₁₁ und T₁₂ bzw. T₁₃ und T₁₄ auf. Zu jedem der Schaltelemente T₁₁ - T₁₅ ist jeweils eine Diode D₀ parallel geschaltet. Die zwei Halbbrückenmodule HBM umfassen darüber hinaus jeweils einen Kondensator C.

Die Kondensatoren C der zwei Halbbrückenmodule HBM bilden Anschlüsse Q1 und Q2, an die ein Batteriespeicher (z. B. über einen Gleichspannungssteller) zur Energiespeicherung und/oder ein Zwei-Level-Umrichter zur Energieeinspeisung und Energieausspeisung angeschlossen werden kann.

Die zwei Halbbrückenmodule HBM sind elektrisch in Reihe geschaltet und mittels eines Schaltelements T₁₅ elektrisch verbunden. Eine Diode D₁ liegt elektrisch parallel zu der Reihenschaltung, die aus den beiden Halbbrückenmodulen HBM und dem Schaltelement T₁₅ besteht.

Die Diode D₁ und das Schaltelement T₁₅ weisen - verglichen mit den Dioden D₀ und den Schaltelementen T₁₁ bis T₁₄ - vorzugsweise die doppelte maximale Sperrspannung auf.

Das Schaltmodul SM gemäß Figur 2 erreicht eine Vollbrückenfunktion in der Stromrichtung von Punkt A nach Punkt B.

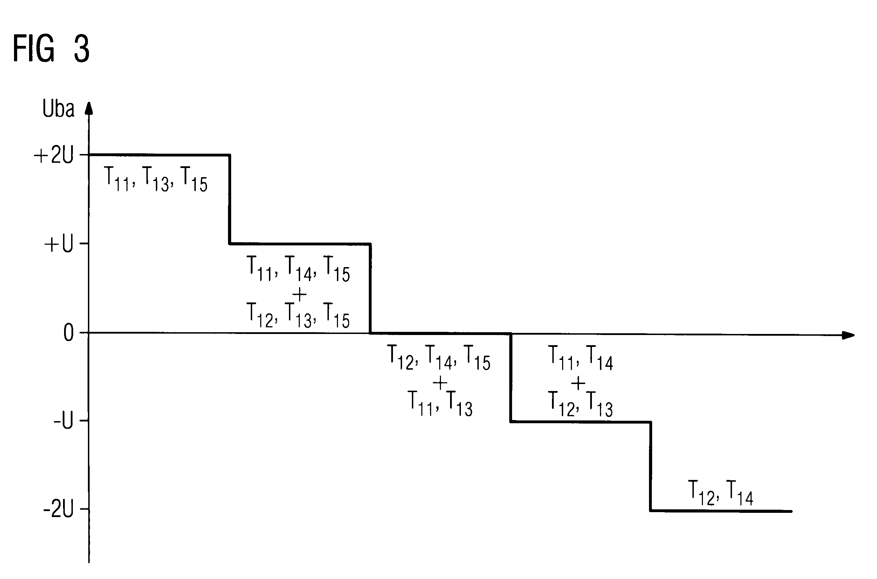

Die Figur 3 zeigt die erreichbaren Spannungsniveaus des Schaltmoduls SM gemäß Figur 2. Es lässt sich erkennen, dass die Spannung Uba zwischen dem Anschluss B des Doppelmoduls und dem Anschluss A (vgl. Fig. 2) folgende Werte einnehmen kann:
- Spannung "+2U": falls Schaltelemente T11, T13, T15 eingeschaltet und alle anderen ausgeschaltet sind.
- Spannung "+1U": falls Schaltelemente T11, T14, T15 eingeschaltet und alle anderen ausgeschaltet sind, oder falls Schaltelemente T12, T13, T15 eingeschaltet und alle anderen ausgeschaltet sind.
- Spannung "±0U": falls Schaltelemente T12, T14, T15 eingeschaltet und alle anderen ausgeschaltet sind, oder falls Schaltelemente T11, T13 eingeschaltet und alle anderen ausgeschaltet sind.
- Spannung "-1U": falls Schaltelemente T11, T14 eingeschaltet und alle anderen ausgeschaltet sind, oder falls Schaltelemente T12, T13 eingeschaltet und alle anderen ausgeschaltet sind.
- Spannung "-2U": falls Schaltelemente T12, T14 eingeschaltet und alle anderen ausgeschaltet sind.

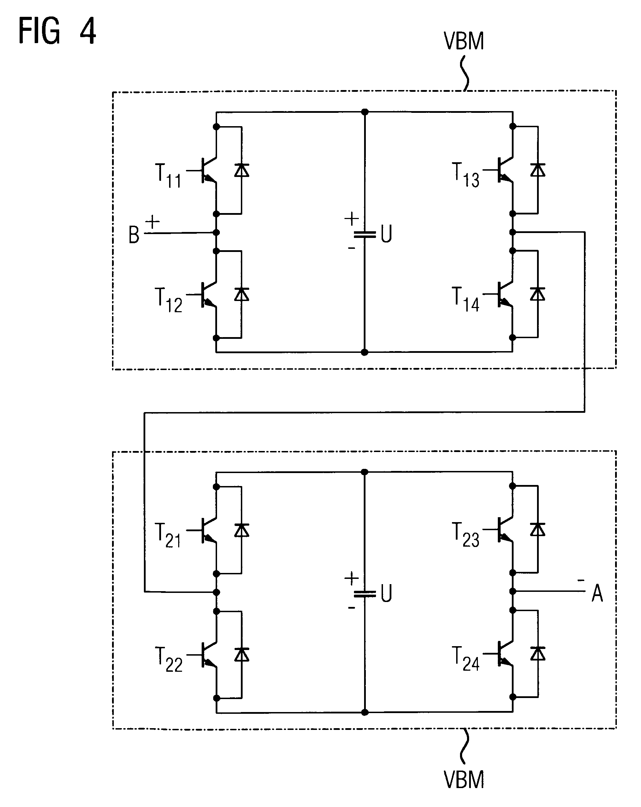

Die Figur 4 zeigt zum Vergleich eine Serienschaltung mit zwei Vollbrückenmodulen VBM, die dieselben Spannungsniveaus wie das Doppelmodul gemäß Figur 2 erzielen kann. Die Serienschaltung gemäß Figur 4 benötigt hierfür jedoch anstelle von nur fünf Transistoren (vgl. Figur 2) acht Transistoren T₁₁ bis T₁₄ und T₂₁ bis T₂₉. Die verschiedenen Spannungsniveaus treten beispielsweise wie folgt auf:
- Spannung "+2U" : falls Schaltelemente T₁₁, T₁₄, T₂₁, T₂₄ eingeschaltet und alle anderen ausgeschaltet sind.
- Spannung "+1U" : falls Schaltelemente T₁₁, T₁₄, T₂₁, T₂₃ eingeschaltet und alle anderen ausgeschaltet sind (dies ist eine von vier Schaltmöglichkeiten für dieses Spannungsniveau).
- Spannung "±0U": falls Schaltelemente T₁₁, T₁₃, T₂₁, T₂₃ eingeschaltet und alle anderen ausgeschaltet sind (dies ist eine von vier Schaltmöglichkeiten für dieses Spannungsniveau).
- Spannung "-1U": falls Schaltelemente T₁₂, T₁₃, T₂₁, T₂₃ eingeschaltet und alle anderen ausgeschaltet sind (dies ist eine von vier Schaltmöglichkeiten für dieses Spannungsniveau).
- Spannung "-2U": falls Schaltelemente T₁₂, T₁₃, T₂₂, T₂₃ eingeschaltet und alle anderen ausgeschaltet.

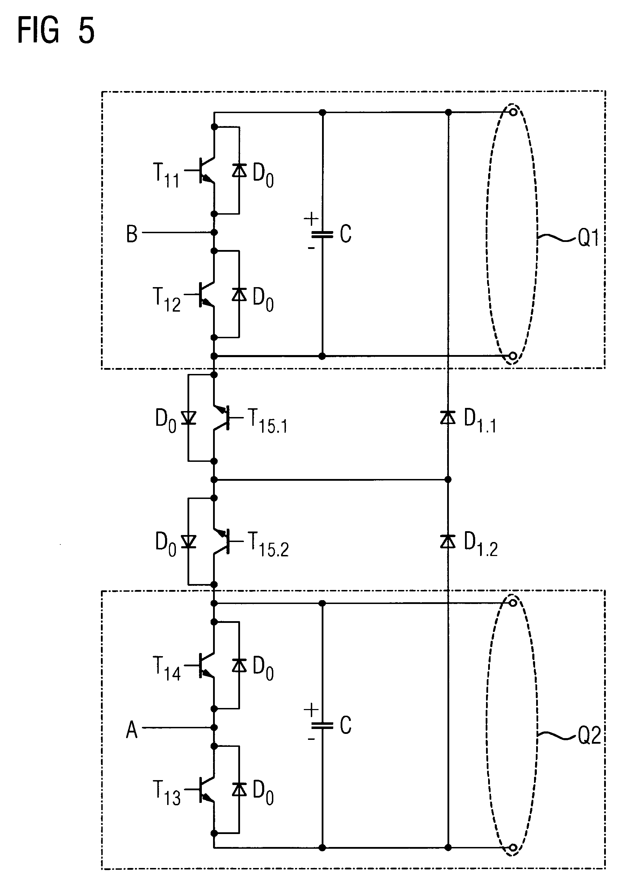

Die Figur 5 zeigt ein zweites Ausführungsbeispiel für ein Schaltmodul SM, das in dem Multizellenkonverter gemäß Figur 1 eingesetzt werden kann. Das Schaltmodul SM wird durch ein Doppelmodul gebildet, das zwei Halbbrückenmodule HBM aufweist. Die zwei Halbbrückenmodule HBM können beispielsweise den Halbbrückenmodulen des Schaltmoduls SM gemäß Figur 2 entsprechen.

Die zwei Halbbrückenmodule HBM sind elektrisch in Reihe geschaltet und mittels zweier Schaltelemente T_{15.1} und T_{15.2} elektrisch verbunden.

Eine erste Diode D_{1.1} liegt elektrisch parallel zu der Reihenschaltung, die aus dem in der Figur 1 oberen Halbbrückenmodul HBM und dem ersten Schaltelement T_{15.1} besteht.

Eine zweite Diode D_{1.2} liegt elektrisch parallel zu der Reihenschaltung, die aus dem in der Figur 1 unteren Halbbrückenmodul HBM und dem zweiten Schaltelement T_{15.2} besteht.

Die Dioden D₀, D_{1.1} und D_{1.2} können dieselbe maximale Sperrspannung aufweisen. Entsprechendes gilt für die Schaltelemente T₁₁ bis T₁₄ sowie T_{15.1} und T_{15.2}, die ebenfalls untereinander dieselbe maximale Sperrspannung aufweisen können.

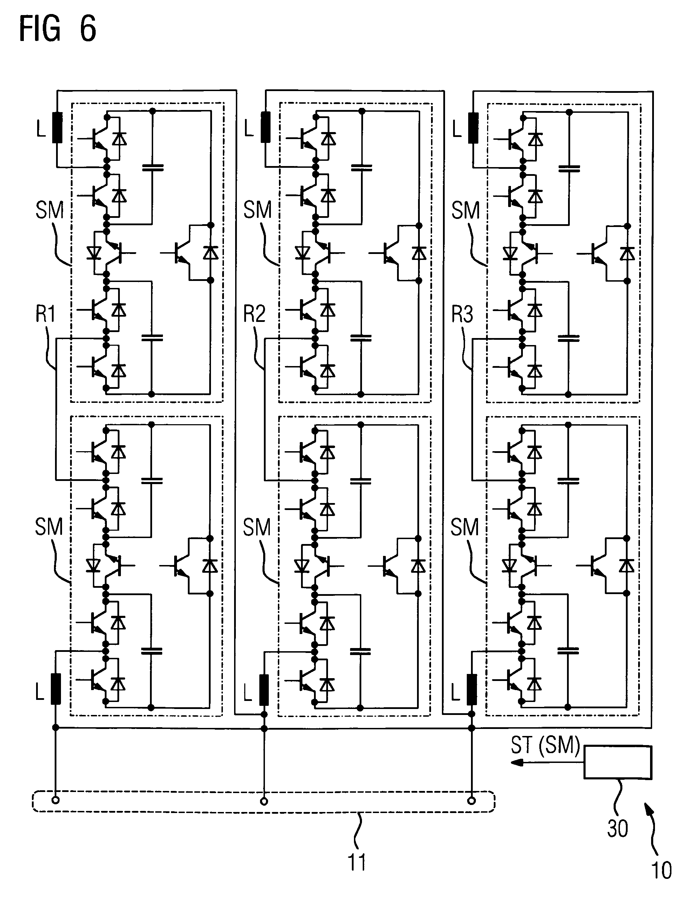

Die Figur 6 zeigt einen dreiphasigen Multizellenkonverter 10 für eine dreiphasige Spannung, der drei elektrisch im Dreieck geschaltete Reihenschaltungen R1, R2, R3 aufweist, von denen jede jeweils mindestens zwei in Reihe geschaltete Schaltmodule SM und zwei Induktivitäten L umfasst. Die Schaltmodule SM können genauso aufgebaut sein, wie dies oben im Zusammenhang mit den Ausführungsbeispielen gemäß Figuren 1 und 5 erläutert worden ist.

Mit den Schaltmodulen SM steht eine Steuereinrichtung 30 in Verbindung, die die Schaltmodule SM mittels schaltmodulindividueller Steuersignale ST(SM) derart ansteuern kann, dass in den Reihenschaltungen R1, R2, R3 vorgegebene Zweigströme fließen. Die Steuereinrichtung 30 ist über individuelle Steuerleitungen jeweils mit jedem der Schaltmodule SM der drei Reihenschaltungen R1, R2 und R3 verbunden. Die Verbindungsleitungen sind in der Figur 6 aus Gründen der Übersicht nicht eingezeichnet.

Zur Ermittlung der optimalen Steuersignale ST(SM) ist die Steuereinrichtung 30 eingangsseitig mit einer Vielzahl an Messsignalen und/oder Messdaten beaufschlagt. Beispielsweise handelt es sich um Messsignale und/oder Messdaten, die die an dem Konverter anliegenden Wechselspannungen, die fließenden Phasenströme und/oder die Zweigströme angeben.

Darüber hinaus ist die Steuereinrichtung 30 - beispielsweise über die bereits erwähnten Steuerleitungen oder über weitere Signalleitungen - derart mit den Schaltmodulen SM der drei Reihenschaltungen R1, R2 und R3 verbunden, dass den jeweiligen Zustand der Schaltmodule beschreibende Zustandsdaten an die Steuereinrichtung 30 übermittelt werden können.

Die Steuereinrichtung 30 weiß also aufgrund der eingangsseitig anliegenden Daten, welche Spannungen und Ströme vorhanden sind, sowie außerdem, in welchem Betriebszustand sich die einzelnen Schaltmodule SM der drei Reihenschaltungen R1, R2 und R3 befinden.

Aufgrund der eingangsseitig anliegenden Messsignale und/oder Messdaten und der eingangsseitig anliegenden Zustandsdaten ist die Steuereinrichtung 30 in der Lage, die Schaltmodule SM derart anzusteuern, dass ein gewünschtes Konverterverhalten, beispielsweise ein gewünschtes Kompensationsverhalten, insbesondere ein gewünschtes Blindleistungs-, Oberschwingungs- oder Flickerkompensationsverhalten, erreicht wird.

Um die beschriebenen Steueraufgaben wahrnehmen zu können, kann die Steuereinrichtung 30 beispielsweise eine Recheneinrichtung (z. B. in Form einer Datenverarbeitungsanlage oder eines Computers) umfassen, die derart programmiert ist, dass sie in Abhängigkeit von den eingangsseitig anliegenden Messsignalen, Messdaten bzw. Zustandsdaten die jeweils optimale Ansteuerung der Schaltmodule SM ermittelt und in dieser Weise die zur Ansteuerung nötigen Steuersignale ST(SM) erzeugt. Ein entsprechendes Steuerprogramm (bzw. Steuerprogrammmodul) zur Ansteuerung der Recheneinrichtung kann in einem in der Steuereinrichtung 30 befindlichen Speicher abgespeichert sein.

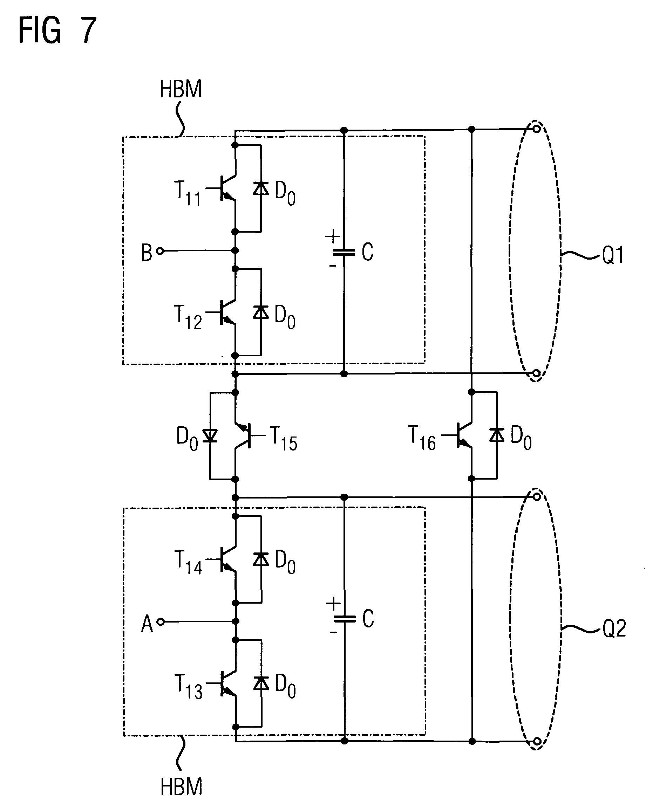

Die Figur 7 zeigt ein weiteres Ausführungsbeispiel für ein Schaltmodul SM, das in dem Multizellenkonverter gemäß Figur 1 oder 6 eingesetzt werden kann. Das Schaltmodul SM wird durch ein Doppelmodul gebildet, das zwei Halbbrückenmodule HBM aufweist. Die zwei Halbbrückenmodule HBM können beispielsweise den Halbbrückenmodulen des Schaltmoduls SM gemäß Figur 2 entsprechen. Die zwei Halbbrückenmodule HBM sind elektrisch in Reihe geschaltet und mittels des Schaltelements T₁₅ elektrisch verbunden.

Im Unterschied zu dem Ausführungsbeispiel gemäß der Figur 2 ist ein Schaltelement T₁₆ elektrisch parallel zu der Reihenschaltung geschaltet, die aus den beiden Halbbrückenmodulen HBM und dem Schaltelement T₁₅ besteht. Parallel zu dem Schaltelement T₁₆ liegt eine Diode D₀. Die Parallelschaltung bestehend aus dem Schaltelement T₁₆ und der Diode D₀ kann beispielsweise durch einen IGBT (Bipolarer Transistor mit GateElektrode) gebildet werden.

Durch das Schaltelement T₁₆ wird eine Vollbrückenfunktion in beiden Stromrichtungen, also vom Punkt A zum Punkt B sowie auch anders herum, gewährleistet, wobei - im Unterschied zu dem Schaltmodul gemäß Figur 4, lediglich sechs Schaltelemente (z. B. Transistoren) statt acht Schaltelemente (z. B. Transistoren) erforderlich sind.

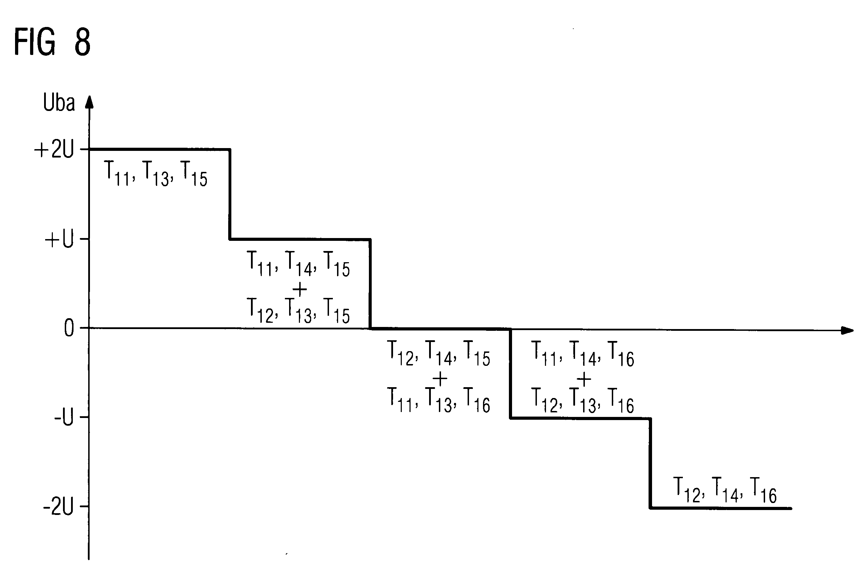

Die Figur 8 zeigt die erreichbaren Spannungsniveaus des Schaltmoduls SM gemäß Figur 7. Es lässt sich erkennen, dass die Spannung Uba zwischen dem Anschluss B des Doppelmoduls und dem Anschluss A (vgl. Fig. 2) folgende Werte einnehmen kann:
- Spannung "+2U": falls Schaltelemente T11, T13, T15 eingeschaltet und alle anderen ausgeschaltet sind.
- Spannung "+1U": falls Schaltelemente T11, T14, T15 eingeschaltet und alle anderen ausgeschaltet sind, oder falls Schaltelemente T12, T13, T15 eingeschaltet und alle anderen ausgeschaltet sind.
- Spannung "+0U": falls Schaltelemente T12, T14, T15 eingeschaltet und alle anderen ausgeschaltet sind, oder falls Schaltelemente T11, T13 und T16 eingeschaltet und alle anderen ausgeschaltet sind.
- Spannung "-1U": falls Schaltelemente T11, T14 und T16 eingeschaltet und alle anderen ausgeschaltet sind, oder falls Schaltelemente T12, T13 und T16 eingeschaltet und alle anderen ausgeschaltet sind.
- Spannung "-2U": falls Schaltelemente T12, T14 und T16 eingeschaltet und alle anderen ausgeschaltet sind.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen wie es in den Ansprüchen festgelegt ist.

### Bezugszeichenliste

- 10: Multizellenkonverter
- 11: erste Anschlussseite
- 12: zweite Anschlussseite
- 30: Steuereinrichtung

- A: Anschluss
- B: Anschluss
- C: Kondensator
- D₀: Diode
- D₁: Diode
- D_{1.1}: Diode
- D_{1.2}: Diode
- HBM: Halbbrückenmodul
- L: Induktivität
- Q1: Anschluss
- Q2: Anschluss
- R1,R2,R3: Reihenschaltung
- SM: Schaltmodul
- ST(SM): Steuersignal
- T₁₁-T₁₄: Schaltelemente
- T₁₅, T_{15.1}, T_{15.2},: Schaltelemente
- T₁₆: Schaltelement
- T₂₁-T₂₄: Schaltelemente
- Uba: Spannung
- VBM: Vollbrückenmodul

## Patentansprüche

1. Multizellenkonverter (10) mit
- zumindest einer Reihenschaltung (R1, R2, R3), die mindestens zwei in Reihe geschaltete Schaltmodule (SM) umfasst, und
- einer mit den Schaltmodulen (SM) in Verbindung stehenden Steuereinrichtung (30), die die Schaltmodule (SM) derart ansteuern kann, dass der Multizellenkonverter (10) ein vorgegebenes Verhalten aufweist,
- wobei jedes der Schaltmodule (SM) jeweils zwei Halbbrückenmodule (HBM) aufweist, die jeweils zwei in Reihe geschaltete Schaltelemente (T₁₁-T₁₂; T₁₃-T₁₄) mit jeweils parallel geschalteter Diode (D₀) und einen zu den in Reihe geschalteten Schaltelementen (T₁₁-T₁₂; T₁₃-T₁₄)) parallel geschalteten elektrischen Energiespeicher (C) umfassen, und
- wobei die zwei Halbbrückenmodule (HBM) in Reihe geschaltet sind und mittels zumindest eines zwischen den beiden Halbbrückenmodulen (HBM) angeordneten Schaltelements (T₁₅, T_{15.1}, T_{15.2}) elektrisch verbunden sind,
**dadurch gekennzeichnet, dass** mindestens eine Diode (D₁), eine aus zwei oder mehr Dioden bestehende Reihenschaltung und/oder zumindest ein Schaltelement elektrisch parallel zu den beiden in Reihe geschalteten Halbbrückenmodulen (HBM) liegt.

2. Multizellenkonverter nach Anspruch 1,
**dadurch gekennzeichnet, dass** der Multizellenkonverter als Schaltelemente sechs Transistoren aufweist, von denen einer elektrisch parallel zu den beiden in Reihe geschalteten Halbbrückenmodulen (HBM) liegt.

3. Multizellenkonverter nach einem der voranstehenden Ansprüche,
**dadurch gekennzeichnet, dass** alle Schaltmodule (SM) des Multizellenkonverters jeweils zwei Halbbrückenmodule aufweisen, die in Reihe geschaltet sind und mittels zumindest eines Schaltelements elektrisch verbunden sind.

4. Multizellenkonverter nach einem der voranstehenden Ansprüche,
**dadurch gekennzeichnet, dass**
- die zwei Halbbrückenmodule (HBM) des zumindest einen Schaltmoduls (SM) mittels zumindest eines ersten und eines zweiten Schaltelements (T_{15.1}, T_{15.2}), die in Reihe angeordnet sind, elektrisch verbunden sind,
- eine erste Diode (D_{1.1}) elektrisch parallel zu einem der beiden Halbbrückenmodule (HBM) und dem ersten Schaltelement (T_{15.1}) liegt und
- eine zweite Diode (D_{1.2}) elektrisch parallel zu dem anderen der beiden Halbbrückenmodule (HBM) und dem zweiten Schaltelement (T_{15.2}) liegt.

5. Multizellenkonverter nach einem der voranstehenden Ansprüche,
**dadurch gekennzeichnet, dass** der Energiespeicher mit einem Batteriespeicher und/oder einem Gleichspannungssteller und/oder einem Zwei-Level-Umrichter in Verbindung steht.

6. Multizellenkonverter nach einem der voranstehenden Ansprüche,
**dadurch gekennzeichnet, dass** der Multizellenkonverter (10) einen Umrichter bildet mit einer ersten Anschlussseite (11), an der zumindest ein Wechselstrom eingespeist und/oder zumindest eine Wechselspannung angelegt werden kann, und einer zweiten Anschlussseite (12), an der ein durch Umrichtung gebildeter umgerichteter Wechseloder Gleichstrom entnommen werden kann,
- wobei der Umrichter zumindest zwei parallel geschaltete Reihenschaltungen (R1, R2, R3) umfasst, deren äußere Anschlüsse mit der zweiten Anschlussseite (12) des Umrichters (10) in Verbindung stehen oder diese bilden,
- wobei jede der parallel geschalteten Reihenschaltungen (R1, R2, R3) jeweils mindestens zwei in Reihe geschaltete Schaltmodule (SM) umfasst und
- wobei mit den Schaltmodulen (SM) eine Steuereinrichtung (30) in Verbindung steht, die die Schaltmodule (SM) derart ansteuern kann, dass in den Reihenschaltungen (R1, R2, R3) Zweigströme fließen und der umgerichtete Wechsel- oder Gleichstrom an der zweiten Anschlussseite (12) eine vorgegebene Größe und/oder einen vorgegebenen zeitlichen Verlauf aufweist.

7. Multizellenkonverter nach Anspruch 6,
**dadurch gekennzeichnet, dass** der Umrichter ein Einspeisen eines Wechsel- oder Gleichstroms an der zweiten Anschlussseite (12) und ein Entnehmen eines durch Umrichtung gebildeten Wechselstroms an der ersten Anschlussseite (11) ermöglicht.

8. Multizellenkonverter nach einem der voranstehenden Ansprüche,
**dadurch gekennzeichnet, dass** der Multizellenkonverter (10) einen Konverter für eine dreiphasige Spannung bildet mit drei elektrisch im Dreieck geschalteten Reihenschaltungen (R1, R2, R3), von denen jede jeweils mindestens zwei in Reihe geschaltete Schaltmodule (SM) umfasst.

9. Multizellenkonverter nach Anspruch 8,
**dadurch gekennzeichnet, dass** der Konverter einen Kompensator bildet, insbesondere einen Blindleistungs-, Oberschwingungs- oder Flickerkompensator.

10. Schaltmodul (SM) für einen Multizellenkonverter (10), mit zwei Halbbrückenmodulen (HBM), die jeweils zwei in Reihe geschaltete Schaltelemente (T₁₁-T₁₂; T₁₃-T₁₄) mit jeweils parallel geschalteter Diode (D₀) und einen zu den in Reihe geschalteten Schaltelementen (T₁₁-T₁₂; T₁₃-T₁₄) parallel geschalteten elektrischen Energiespeicher (C) umfassen, wobei die zwei Halbbrückenmodule (HBM) in Reihe geschaltet sind und mittels zumindest eines zwischen den beiden Halbbrückenmodulen (HBM) angeordneten Schaltelements (T₁₅, T_{15.1}, T_{15.2}) elektrisch verbunden sind,
**dadurch gekennzeichnet, dass** mindestens eine Diode (D₁), eine aus zwei oder mehr Dioden bestehende Reihenschaltung und/oder zumindest ein Schaltelement elektrisch parallel zu den beiden in Reihe geschalteten Halbbrückenmodulen (HBM) liegt.

11. Schaltmodul nach Anspruch 10,
**dadurch gekennzeichnet, dass** eine Diode (D₁) elektrisch parallel zu den beiden in Reihe geschalteten Halbbrückenmodulen (HBM) liegt.

12. Schaltmodul nach einem der voranstehenden Ansprüche 10-11,
**dadurch gekennzeichnet, dass**
- die zwei Halbbrückenmodule (HBM) mittels zumindest eines ersten und eines zweiten Schaltelements (T_{15.1}, T_{15.2}), die in Reihe angeordnet sind, elektrisch verbunden sind,
- eine erste Diode (D_{1.1}) elektrisch parallel zu einem der beiden Halbbrückenmodule (HBM) und dem ersten Schaltelement (T_{15.1}) liegt und
- eine zweite Diode (D_{1.2}) elektrisch parallel zu dem anderen der beiden Halbbrückenmodule (HBM) und dem zweiten Schaltelement (T_{15.2}) liegt.

## Claims

1. Multicell converter (10) with
- at least one series connection (R1, R2, R3), which comprises at least two switching modules (SM) connected in series, and
- a control device (30), which is connected to the switching modules (SM) and can activate the switching modules (SM) in such a way that the multicell converter (10) has a predetermined behaviour,
- wherein each of the switching modules (SM) respectively has two half-bridge modules (HBM), which each comprise two switching elements (T₁₁-T₁₂; T₁₃-T₁₄) connected in series comprising in each case a diode (D₀) connected in parallel and an electrical energy store (C), which is connected in parallel with the switching elements (T₁₁-T₁₂; T₁₃-T₁₄) connected in series, and
- wherein the two half-bridge modules (HBM) are connected in series and are electrically connected by means of at least one switching element (T₁₅, T_{15.1}, T_{15.2}) arranged between the two half-bridge modules (HBM),
**characterized in that**
at least one diode (D₁), a series connection consisting of two or more diodes and/or at least one switching element are electrically parallel to the two half-bridge modules (HBM) connected in series.

2. Multicell converter according to Claim 1,
**characterized in that**
the multicell converter has as switching elements six transistors, one of which is electrically parallel to the two half-bridge modules (HBM) connected in series.

3. Multicell converter according to one of the preceding claims,
**characterized in that**
all of the switching modules (SM) of the multicell converter respectively have two half-bridge modules, which are connected in series and are electrically connected by means of at least one switching element.

4. Multicell converter according to one of the preceding claims,
**characterized in that**
- the two half-bridge modules (HBM) of the at least one switching module (SM) are electrically connected by means of at least one first and one second switching element (T_{15.1}, T_{15.2}), which are arranged in series,
- a first diode (D_{1.1}) is electrically parallel to one of the two half-bridge modules (HBM) and the first switching element (T_{15.1}) and
- a second diode (D_{1.2}) is electrically parallel to the other of the two half-bridge modules (HBM) and the second switching element (T_{15.2}).

5. Multicell converter according to one of the preceding claims,
**characterized in that**
the energy store is connected to a battery and/or a DC voltage controller and/or a two-level inverter.

6. Multicell converter according to one of the preceding claims,
**characterized in that**
the multicell converter (10) forms an inverter with a first connection side (11), on which at least one alternating current is fed in and/or at least one alternating voltage can be applied, and a second connection side (12), on which an inverted alternating or direct current formed by inversion can be removed,
- wherein the inverter comprises at least two series connections (R1, R2, R3) connected in parallel, the outer terminals of which are connected to the second connection side (12) of the inverter (10) or form it,
- wherein each of the series connections (R1, R2, R3) connected in parallel in each case comprises at least two switching modules (SM) connected in series, and
- wherein a controlling device (30) is connected to the switching modules (SM) and can activate the switching modules (SM) in such a way that branch currents flow in the series connections (R1, R2, R3) and the inverted alternating or direct current on the second connection side (12) has a predetermined magnitude and/or a predetermined progression over time.

7. Multicell converter according to Claim 6,
**characterized in that**
the inverter allows a feed-in of an alternating or direct current on the second connection side (12) and a removal of an alternating current formed by inversion on the first connection side (11).

8. Multicell converter according to one of the preceding claims,
**characterized in that**
the multicell converter (10) forms a converter for a three-phase voltage with three series connections (R1, R2, R3) electrically connected in a delta arrangement, each of which respectively comprises at least two switching modules (SM) connected in series.

9. Multicell converter according to Claim 8,
**characterized in that**
the converter forms a compensator, in particular a reactive-power, harmonic or flicker compensator.

10. Switching module (SM) for a multicell converter (10), with two half-bridge modules (HBM), which each comprise two switching elements (T₁₁-T₁₂; T₁₃-T₁₄) connected in series comprising in each case a diode (D₀) connected in parallel and an electrical energy store (C), which is connected in parallel with the switching elements (T₁₁-T₁₂; T₁₃-T₁₄) connected in series, wherein the two half-bridge modules (HBM) are connected in series and are electrically connected by means of at least one switching element (T₁₅, T_{15.1}, T_{15.2}) arranged between the two half-bridge modules (HBM),
**characterized in that**
at least one diode (D₁), a series connection consisting of two or more diodes and/or at least one switching element are electrically parallel to the two half-bridge modules (HBM) connected in series.

11. Switching module according to Claim 10,
**characterized in that**
a diode (D₁) is electrically parallel to the two half-bridge modules (HBM) connected in series.

12. Switching module according to one of the preceding Claims 10-11,
**characterized in that**
- the two half-bridge modules (HBM) are electrically connected by means of at least one first and one second switching element (T_{15.1}, T_{15.2}), which are arranged in series,
- a first diode (D_{1.1}) is electrically parallel to one of the two half-bridge modules (HBM) and the first switching element (T_{15.1}) and
- a second diode (D_{1.2}) is electrically parallel to the other of the two half-bridge modules (HBM) and the second switching element (T_{15.2}).

## Revendications

1. Convertisseur ( 10 ) à cellules multiples comprenant
- au moins un circuit ( R1, R2, R3 ) série qui comprend au moins deux modules ( SM ) de coupure montés en série, et
- un dispositif ( 30 ) de commande qui est en liaison avec les modules ( SM ) de coupure et qui peut commander les modules ( SM ) de coupure de manière à ce que le convertisseur ( 10 ) à cellules multiples ait un comportement donné à l'avance,
- dans lequel chacun des modules ( SM ) de coupure a deux modules ( HBM ) de demi-pont qui comprennent respectivement deux éléments ( T₁₁ - T₁₂, T₁₃ T₁₄ ) de coupure montés en série et ayant respectivement une diode ( D₀ ) montée en parallèle et un accumulateur ( C ) d'énergie électrique monté en parallèle aux éléments ( T₁₁ - T₁₂, T₁₃ - T₁₄ ) de coupure montés en série, et
- dans lequel les deux modules ( HBM ) de demi-pont sont montés en série et sont reliés électriquement au moyen d'au moins un élément ( T₁₅, T_{15.1}, T_{15.2} ) de coupure monté entre les deux modules ( HBM ) de demi-pont,
**caractérisé en ce que**
au moins une diode ( D₁ ), un circuit série constitué de deux ou de plusieurs diodes et/ou au moins un élément de coupure est/sont monté(e)(s) en parallèle électriquement avec les deux modules ( HBM ) de demi-pont montés en série.

2. Convertisseur à cellules multiples suivant la revendication 1,
**caractérisé en ce que**
le convertisseur à cellules multiples a comme élément de coupure six transistors dont l'un est monté en parallèle électriquement avec les deux modules ( HBM ) de demi-pont montés en série.

3. Convertisseur à cellules multiples suivant l'une des revendications précédentes,
**caractérisé en ce que**
tous les modules ( SM ) de coupure du convertisseur à cellules multiples ont respectivement deux modules de demi-pont qui sont montés en série et qui sont reliés électriquement au moyen d'au moins un élément de coupure.

4. Convertisseur à cellules multiples suivant l'une des revendications précédentes, **caractérisé en ce que**
- les deux modules ( HBM ) de demi-pont du au moins un module ( SM ) de coupure sont reliés électriquement au moyen d'au moins un premier et d'un deuxième élément ( T_{15.1}, T_{15.2} ) de coupure qui sont montés en série,
- une première diode ( D_{1.1} ) est montée en parallèle électriquement avec l'un des deux modules ( HBM ) de demi-pont et le premier élément ( T_{15.1} ) de coupure, et
- une deuxième diode ( D_{1.2} ) est montée en parallèle électriquement avec l'autre des deux modules ( HBM ) de demi-pont et le deuxième élément ( T_{15.2} ) de coupure.

5. Convertisseur à cellules multiples suivant l'une des revendications précédentes,
**caractérisé en ce que**
l'accumulateur d'énergie est en liaison avec un accumulateur à batterie et/ou avec un régleur de tension continue et/ou avec un convertisseur à deux niveaux.

6. Convertisseur à cellules multiples suivant l'une des revendications précédentes,
**caractérisé en ce que**
le convertisseur ( 10 ) à cellules multiples forme un convertisseur ayant un premier côté ( 11 ) de connexion où peut être injecté au moins un courant alternatif et/ou peut être appliquée au moins une tension alternative, et un deuxième côté ( 12 ) de connexion où un courant alternatif ou continu converti et formé par le convertisseur peut être prélevé,
- dans lequel le convertisseur comprend au moins deux circuits ( R1, R2, R3 ) série montés en parallèle, dont les bornes extérieures sont en liaison avec le deuxième côté ( 12 ) de connexion du convertisseur ( 10 ) ou le forment,
- dans lequel chacun des circuits ( R1, R2, R3 ) série montés en parallèle comprend respectivement au moins deux modules ( SM ) de coupure montés en série, et
- dans lequel est en liaison avec les modules ( SM ) de coupure un dispositif ( 30 ) de commande qui peut commander les modules( SM ) de coupure de manière à ce que des courants de dérivation passent dans les circuits ( R1, R2, R3 ) série et le courant alternatif ou continu converti a sur le deuxième côté ( 12 ) de connexion une valeur donnée à l'avance et/ou une courbe dans le temps donnée à l'avance.

7. Convertisseur à cellules multiples suivant la revendication 6,
**caractérisé en ce que**
le convertisseur permet d'alimenter en courant alternatif ou continu le deuxième côté ( 12 ) de connexion et de prélever du premier côté ( 11 ) de connexion un courant alternatif formé par la conversion.

8. Convertisseur à cellules multiples suivant l'une des revendications précédentes,
**caractérisé en ce que**
le convertisseur ( 10 ) à cellules multiples forme un convertisseur pour une tension triphasée ayant trois circuits ( R1, R2, R3 ) série montés électriquement en triangle, dont chacun comprend respectivement au moins deux modules ( SM ) de coupure montés en série.

9. Convertisseur à cellules multiples suivant la revendication 8,
**caractérisé en ce que**
le convertisseur forme un compensateur, notamment un compensateur de puissance réactive, un compensateur d'harmonique ou un compensateur de scintillation.

10. Module ( SM ) de coupure pour un convertisseur ( 10 ) à cellules multiples comprenant deux modules ( HBM ) de demi-pont, qui comprennent respectivement deux éléments ( T₁₁ - T₁₂, T₁₃ - T₁₄ ) de coupure montés en série et ayant respectivement une diode ( D₀ ) montée en parallèle et un accumulateur ( C ) d'énergie électrique monté en parallèle aux éléments ( T₁₁-T₁₂, T₁₃ - T₁₄ ) de coupure montés en série, les deux modules ( HBM ) de demi-pont étant montés en série et étant reliés électriquement au moyen d'au moins un élément ( T₁₅, T_{15.1}, T_{15.2} ) de coupure monté entre les deux modules ( HBM ) de demi-pont, **caractérisé en ce que**
au moins une diode ( D₁ ), un circuit série constitué de deux ou de plusieurs diodes et/ou au moins un élément de coupure est/sont monté(e)(s) en parallèle électriquement avec les deux modules ( HBM ) de demi-pont montés en série.

11. Module suivant la revendication 10,
**caractérisé en ce que**
une diode ( D₁ ) est montée en parallèle électriquement avec les deux modules ( HBM ) de demi-pont montés en série.

12. Module suivant l'une des revendications précédentes 10 à 11,
**caractérisé en ce que**
- les deux modules ( HBM ) de demi-pont sont reliés électriquement au moyen d'au moins un premier et un deuxième élément ( T_{15.1}, T_{15.2} ) de coupure qui sont montés en série,
- une première diode ( D_{1.1} ) est montée en parallèle électriquement avec l'un des deux modules ( HBM ) de demi-pont et le premier élément ( T_{15.1} ) de coupure, et
- une deuxième diode ( D_{1.2} ) est montée en parallèle électriquement avec l'autre des deux modules ( HBM ) de demi-pont et le deuxième élément ( T_{15.2} ) de coupure.
